# EUROPEAN PATENT APPLICATION

(11) **EP 4 564 468 A1**
(43) Date of publication of application: **04.06.2025**
(21) Application number: 23913944.7
(22) Date of filing: 03.01.2023
(51) Int. Cl.: H01M 4/139

(54) **NEGATIVE ELECTRODE SHEET, PREPARATION METHOD THEREFOR, BATTERY AND ELECTRICAL DEVICE**

(71) Applicant: CONTEMPORARY AMPEREX TECHNOLOGY (HONG KONG) LIMITED, Central (HK)
(72) Inventor: XIE, Zhangdi, Ningde, Fujian 352100 (CN); LIAO, Shangju, Ningde, Fujian 352100 (CN); HU, Bobing, Ningde, Fujian 352100 (CN); LIU, Chengyong, Ningde, Fujian 352100 (CN); LI, Yuan, Ningde, Fujian 352100 (CN); HUANG, Shengyuan, Ningde, Fujian 352100 (CN); CAI, Xiaolan, Ningde, Fujian 352100 (CN)
(74) Representative: Laufhütte, Dieter
(86) International application number: PCT/CN2023/070217
(87) International publication number: WO 2024/145784

(57) **Abstract**

This application discloses a negative electrode plate and a preparation method thereof, a battery, and an electric device. The negative electrode plate includes a current collector, a lithiophilic plating layer, and a negative electrode active material layer, where the lithiophilic plating layer is formed on a surface on at least one side of the current collector, the negative electrode active material layer is formed on at least partial surface on a side, farther away from the current collector, of the lithiophilic plating layer, and a through hole extending along a thickness direction of the negative electrode active material layer is arranged on the negative electrode active material layer.

## Description

### TECHNICAL FIELD

This application pertains to the technical field of batteries, and specifically, relates to a negative electrode plate and a preparation method thereof, a battery, and an electric device.

### BACKGROUND

Lithium-ion batteries have advantages such as high voltage, high energy density, and long cycle life, and have become one of batteries with the most promising application and development prospects. Lithium metal negative electrodes have attracted extensive attention due to their extremely high theoretical specific capacity. However, with charge and discharge cycles of the batteries, interfacial side reactions of lithium metal negative electrodes cause irreversible consumption of lithium ions, and uneven deposition causes huge volume swelling, which seriously threatens cycle life of lithium metal batteries.

### SUMMARY

In view of the technical problems in the background, this application provides a negative electrode plate, to resolve the problems of serious volume swelling and deficient cycle life of the existing negative electrode plate.

To achieve the foregoing objective, a first aspect of this application provides a negative electrode plate, including: a current collector, a lithiophilic plating layer, and a negative electrode active material layer, the lithiophilic plating layer is formed on a surface on at least one side of the current collector, and the negative electrode active material layer is formed on at least partial surface on a side, farther away from the current collector, of the lithiophilic plating layer, and a through hole extending along a thickness direction of the negative electrode active material layer is arranged on the negative electrode active material layer.

Compared with the prior art, this application has at least the following beneficial effects: The negative electrode plate in this application includes the current collector, the lithiophilic plating layer and the negative electrode active material layer, and the through hole extending along the thickness direction of the negative electrode active material layer is arranged on the negative electrode active material layer. The through hole can provide a migration path for lithium ions in the electrolyte and stimulate the electrolyte to infiltrate into the negative electrode plate, and more lithium ions in the electrolyte can deposit inside the negative electrode active material layer via the through hole, which reduces lithium dendrites formed due to the precipitation of lithium ions on the surface of the negative electrode plate, improving safety of the negative electrode. In addition, the through hole in the negative electrode active material layer can guide lithium ions to uniformly deposit inside the negative electrode active material layer, thereby reducing the volume swelling of the negative electrode plate. In addition, the lithiophilic plating layer is formed between the current collector and the negative electrode active material layer, so that nucleation potential and deposition potential of lithium in the electrolyte can be reduced, to further effectively guide more lithium ions in the electrolyte to uniformly deposit inside the negative electrode active material layer, and inhibit reactivity of the surface of the negative electrode plate and the electrolyte, thereby effectively improving a lithium-ion utilization rate of the negative electrode plate. Therefore, the negative electrode plate in this application has small volume swelling and excellent safety performance, so that the battery with the negative electrode plate has excellent safety performance and cycle life.

In any embodiment of this application, the lithiophilic plating layer includes at least one of a group IB element, a group IIA element, a group IIB element, a group IIIA element, or a group VIII element. Therefore, the volume swelling of the negative electrode plate can be alleviated and the utilization rate of lithium ions can be improved.

In any embodiment of this application, the lithiophilic plating layer includes at least one of Ag, Au, Pt, In, Zn, Mg, or Al. Therefore, the volume swelling of the negative electrode plate can be alleviated and the utilization rate of lithium ions can be improved.

In any embodiment of this application, a thickness of the lithiophilic plating layer is 10 nm to 500 nm. Therefore, the volume swelling and safety performance of the negative electrode plate can be improved.

In any embodiment of this application, the thickness of the lithiophilic plating layer is 20 nm to 200 nm. Therefore, the volume swelling and safety performance of the negative electrode plate can be improved.

In any embodiment of this application, the thickness of the negative electrode active material layer is 30 µm to 100 µm. Therefore, the energy density of the negative electrode plate and the utilization rate of lithium ions can be improved.

In any embodiment of this application, a percentage of a total volume of the through hole in a total volume of the negative electrode active material layer is not greater than 60%. Therefore, the negative electrode plate has higher strength and mechanical performance.

In any embodiment of this application, the percentage of the total volume of the through hole in the total volume of the negative electrode active material layer is 20% to 50%. Therefore, the negative electrode plate has higher strength and mechanical performance.

In any embodiment of this application, a depth of the through hole is not less than 50% of the thickness of the negative electrode active material layer. Therefore, the volume swelling of the negative electrode plate can be effectively alleviated.

In any embodiment of this application, a pore diameter of the through hole is not greater than 100 µm. Therefore, the negative electrode plate has higher strength and mechanical performance.

In any embodiment of this application, a pore diameter of the through hole is not greater than 50 µm. Therefore, the volume swelling of the negative electrode plate can be effectively alleviated.

In any embodiment of this application, a distance between the two adjacent through holes is not greater than 100 µm. Therefore, the volume swelling of the negative electrode plate can be effectively alleviated.

In any embodiment of this application, the negative electrode active material layer includes a negative electrode active material, the negative electrode active material includes a graphitized carbon-like material, and a percentage of a mass of the graphitized carbon-like material in a total mass of the negative electrode active material is not less than 50%. Therefore, the overall energy density of the battery cell can be effectively improved.

In any embodiment of this application, a percentage of a mass of the graphitized carbon-like material in a total mass of the negative electrode active material is 50% to 70%. Therefore, the overall energy density and rate performance of the battery cell can be effectively improved.

In any embodiment of this application, the graphitized carbon-like material includes at least one of hard carbon (pyrolytic carbon, carbon black, resin carbon, and biomass carbon) or soft carbon (amorphous carbon). Therefore, the overall energy density and rate performance of the battery cell can be effectively improved.

In any embodiment of this application, the negative electrode active material also includes a graphite material (natural graphite, artificial graphite, and composite graphite). Therefore, the first-cycle coulombic efficiency of the battery can be improved.

A second aspect of this application provides a method for preparing the negative electrode plate in the foregoing embodiment, including:
forming a lithiophilic plating layer on at least partial surface of a current collector; and
forming a negative electrode active material layer on at least partial surface on a side, farther away from the current collector, of the lithiophilic plating layer, and arranging a through hole extending along a thickness direction of the negative electrode active material layer on the negative electrode active material layer.

Therefore, the negative electrode plate with low volume swelling and excellent safety performance can be prepared in the method, so that the battery with the negative electrode plate has excellent safety performance and cycle life.

In any embodiment of this application, the through hole extending along the thickness direction of the negative electrode active material layer is arranged on the negative electrode active material layer using a laser die cutting machine.

In any embodiment of this application, laser output power of the laser die cutting machine is not greater than 500 W.

In any embodiment of this application, the laser output power of the laser die cutting machine is 10 W to 100 W.

In any embodiment of this application, laser repetition frequency of the laser die cutting machine is 50 kHZ to 2000 kHZ.

In any embodiment of this application, the laser repetition frequency of the laser die cutting machine is 50 kHZ to 500 kHZ.

In any embodiment of this application, a spot movement speed of the laser die cutting machine is 500 mm/s to 20000 mm/s.

In any embodiment of this application, the spot movement speed of the laser die cutting machine is 1000 mm/s to 9000 mm/s.

A third aspect of this application provides a battery, including the negative electrode plate in the first aspect of this application or a negative electrode plate obtained in the method in the second aspect of this application. Therefore, the battery has excellent safety performance and cycle life.

A fourth aspect of this application provides an electric device, including the battery in the third aspect of this application, where the battery is configured to supply electric energy. Therefore, the electric device has excellent cycle life.

### BRIEF DESCRIPTION OF DRAWINGS

To describe the technical solutions in this application more clearly, the following briefly describes the accompanying drawings used in this application. Apparently, the accompanying drawings in the following descriptions show merely some embodiments of this application, and persons of ordinary skill in the art may still derive other drawings from the accompanying drawings without creative efforts.
FIG. 1 is a schematic structural diagram of a longitudinal section of a negative electrode plate according to an embodiment of this application.
FIG. 2 is a schematic structural diagram of a battery according to an embodiment of this application.
FIG. 3 is a schematic structural diagram of a battery module according to an embodiment of this application.
FIG. 4 is a schematic structural diagram of a battery pack according to an embodiment of this application.
FIG. 5 is an exploded view of FIG. 4.
FIG. 6 is a schematic diagram of an embodiment of an electric apparatus using a battery as a power supply.
FIG. 7 is an image of a negative electrode plate 1 in this application under an optical microscope.
FIG. 8 is a surface morphology image of a negative electrode plate after a battery in Example 1 is disassembled.
FIG. 9 is a surface morphology image of a negative electrode plate after a battery in Comparative Example 1 is disassembled.

### Description of reference signs:

100: negative electrode plate; 10: current collector; 20: lithiophilic plating layer; 30: negative electrode active material layer; 31: through hole; 1: battery; 2: battery module; 3: battery pack; 4: upper box body; and 5: lower box body.

### DESCRIPTION OF EMBODIMENTS

The following further describes this application with reference to specific embodiments. It should be understood that these specific embodiments are merely intended to illustrate this application but not to limit the scope of this application.

For brevity, this specification specifically discloses only some numerical ranges. However, any lower limit may be combined with any upper limit to form an unspecified range, and any lower limit may be combined with another lower limit to form an unspecified range, and likewise, any upper limit may be combined with any other upper limit to form an unspecified range. In addition, each individually disclosed point or individual single numerical value may itself be a lower limit or an upper limit which can be combined with any other point or individual numerical value or combined with another lower limit or upper limit to form a range not expressly recorded.

In the description of this specification, unless otherwise stated, a term "or (or)" indicates inclusion. That is, the phrase "A or (or) B" means "A, B, or both A and B". More specifically, any one of the following conditions satisfies the condition "A or B": A is true (or present) and B is false (or not present); A is false (or not present) and B is true (or present); or both A and B are true (or present).

In the descriptions of this specification, it should be noted that "more than" or "less than" is inclusive of the present number and that "more" in "one or more" means two or more than two, unless otherwise specified.

Unless otherwise specified, terms used in this application have well-known meanings generally understood by persons skilled in the art. Unless otherwise specified, numerical values of parameters mentioned in this application may be measured by using various measurement methods commonly used in the art (for example, they may be tested by using the methods provided in the embodiments of this application).

Currently, from a perspective of market development, application of lithium-ion batteries is becoming more and more extensive. Lithium-ion batteries have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace. With continuous expansion of application fields of traction batteries, market demands for the traction batteries are also expanding.

Lithium metal negative electrodes have attracted extensive attention of researchers due to their extremely high theoretical specific capacity. However, interfacial side reactions during cycles of the lithium metal negative electrodes cause irreversible consumption of lithium ions and a reduction in a utilization rate of lithium ions, and uneven deposition causes huge volume swelling, which seriously threatens cycle life of the lithium metal batteries.

As a three-dimensional current collector, copper foil has high lithium nucleation overpotential, which is not conducive to uniform deposition of lithium. Compared with a copper matrix, the negative electrode active material layer arranged on the current collector has higher lithiation capacity, which facilitates improvement of an overall energy density of the battery cell. In addition, the negative electrode active material layer can alleviate volume swelling of the negative electrode plate during charging and discharging. However, under impact of the negative electrode lithium precipitation mode dominated by lithium-ion diffusion and internal sinuosity of the negative electrode active material, a migration path of lithium ions in the electrolyte is blocked inside the negative electrode plate, and therefore, metallic lithium is likely to precipitate on a surface of the negative electrode plate, which causes a great safety hazard, thereby seriously affecting recycling of active lithium and overall performance of the battery, and hindering the commercial application and development prospect of the lithium metal battery.

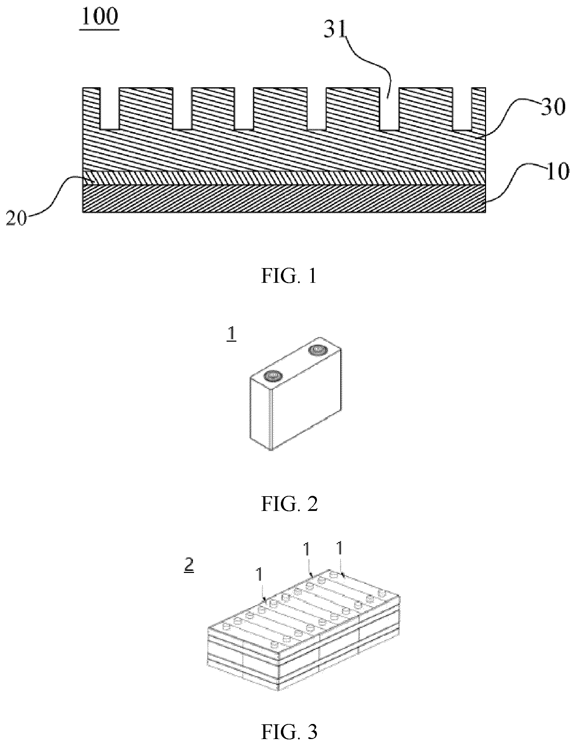

Therefore, a first aspect of this application provides a negative electrode plate. Referring to FIG. 1, the negative electrode plate 100 includes a current collector 10, a lithiophilic plating layer 20, and a negative electrode active material layer 30, where the lithiophilic plating layer 20 is formed on a surface on at least one side of the current collector 10, the negative electrode active material layer 30 is formed on at least partial surface on a side, farther away from the current collector 10, of the lithiophilic plating layer 20, and a through hole 31 extending along a thickness direction of the negative electrode active material layer 30 is arranged on the negative electrode active material layer 30.

It should be noted that "the lithiophilic plating layer 20 is formed on a surface on at least one side of the current collector 10" should be understood as "the lithiophilic plating layer 20 is in direct contact with the surface of the current collector 10", that is, "direct contact", or should be understood as "there is another layer between the surface of the current collector 10 and the lithiophilic plating layer 20", that is, "indirect contact". In addition, the lithiophilic plating layer 20 may be formed on a partial or entire surface of the current collector 10. Likewise, "the negative electrode active material layer 30 is formed on at least partial surface on a side, farther away from the current collector 10, of the lithiophilic plating layer 20" should be understood as "the negative electrode active material layer 30 is in direct contact with the surface of the lithiophilic plating layer 20 or there is another layer between the negative electrode active material layer 30 and the lithiophilic plating layer 20". In addition, the "through hole 31" refers to an opening that extends along a thickness direction of the negative electrode active material layer 30 and that is arranged on the negative electrode active material layer 30, and the "through hole 31" may penetrate the entire negative electrode active material layer 30 or only part of the negative electrode active material layer 30.

Without any wish to be bound by any theory, the inventors have found through a lot of research that the through hole 31 extending along the thickness direction of the negative electrode active material layer 30 is arranged on the negative electrode active material layer 30 on the current collector 10, and therefore, the through hole 31 can provide a migration path for lithium ions in the electrolyte and stimulate the electrolyte to infiltrate into the negative electrode plate 100, and more lithium ions in the electrolyte can deposit inside the negative electrode active material layer 30 via the through hole 31, which reduces lithium dendrites formed due to the precipitation of lithium ions on the surface of the negative electrode plate 100, improving safety of the negative electrode. In addition, the through hole 31 in the negative electrode active material layer 30 can guide lithium ions to uniformly deposit inside the negative electrode active material layer 30, thereby reducing the volume swelling of the negative electrode plate 100. In addition, the lithiophilic plating layer 20 is formed between the current collector 10 and the negative electrode active material layer 30, so that nucleation potential and deposition potential of lithium in the electrolyte can be reduced, to further effectively guide more lithium ions in the electrolyte to uniformly deposit inside the negative electrode active material layer 30, and inhibit reactivity of the surface of the negative electrode plate 100 and the electrolyte, thereby effectively improving a lithium-ion utilization rate of the negative electrode plate 100. Therefore, the negative electrode plate 100 in this application has small volume swelling and excellent safety performance, so that the battery with the negative electrode plate has excellent safety performance and cycle life.

The inventors have found through in-depth research that when the negative electrode plate in this application meets the foregoing conditions, the performance of the lithium battery can be further improved if one or more of the following conditions are optionally met.

In some embodiments, the current collector 10 may be made of a material such as conventional metal foil, carbon-coated metal foil, or a porous metal plate. In an example, a copper foil may be used as the current collector 10.

In some embodiments, the lithiophilic plating layer 20 includes at least one of a group IB element, a group IIA element, a group IIB element, a group IIIA element, or a group VIII element. In a phase diagram, the foregoing elements can form obvious intermetallic compounds or solid solutions with lithium, so that nucleation potential and deposition potential of lithium can be reduced, to effectively guide more lithium ions in the electrolyte to uniformly deposit inside the negative electrode active material layer 30, and inhibit reactivity of the surface of the negative electrode plate 100 and the electrolyte, thereby effectively improving a lithium-ion utilization rate of the negative electrode plate 100. In some other embodiments, the lithiophilic plating layer 20 includes at least one of Ag, Au, Pt, In, Zn, Mg, or Al. Specifically, the lithiophilic plating layer 20 may include Ag, Au, Pt, In, Zn, Mg, and Al metal or/and a metal oxide. The lithiophilic plating layer 20 may be prepared in a conventional plating method in the prior art, including but not limited to processes such as electron beam evaporation, magnetron sputtering, and foil calendering.

In some embodiments, a thickness of the lithiophilic plating layer 20 is 10 nm to 500 nm, for example, 10 nm to 490 nm, 20 nm to 480 nm, 30 nm to 470 nm, 50 nm to 450 nm, 50 nm to 400 nm, 50 nm to 350 nm, 50 nm to 300 nm, 50 nm to 250 nm, 50 nm to 200 nm, 50 nm to 150 nm, 50 nm to 120 nm, 50 nm to 100 nm, 50 nm to 75 nm, 70 nm to 425 nm, 100 nm to 400 nm, 120 nm to 380 nm, 150 nm to 350 nm, 175 nm to 325 nm, 200 nm to 300nm, 225 nm to 275nm, or 250 nm to 275 nm. The lithiophilic plating layer 20 within this thickness range can effectively inhibit the volume swelling of the negative electrode plate 100 and improve the utilization rate of lithium ions. In some other embodiments, the thickness of the lithiophilic plating layer 20 is 20 nm to 200 nm.

In some embodiments, a thickness of the negative electrode active material layer 30 is 30 µm to 100 µm, for example, 30 µm to 90 µm, 30 µm to 80 µm, 30 µm to 70 µm, 30 µm to 60 µm, 30 µm to 50 µm, or 30 µm to 40 µm. Therefore, the negative electrode active material layer 30 with the thickness in this application can not only improve an overall energy density of the battery cell, but also alleviate the volume swelling of the negative electrode plate 100 during charging and discharging.

In some embodiments, a percentage of a total volume of the through hole 31 in a total volume of the negative electrode active material layer 30 is not greater than 60%, and is, for example, 10% to 60%, 10% to 50%, 15% to 50%, 20% to 50%, 20% to 45%, 20% to 40%, 25% to 40%, 30% to 40%, or 35% to 40%. The through hole 31 is formed on the negative electrode active material layer 30, and the through hole 31 can provide a migration path for lithium ions in the electrolyte and stimulate the electrolyte to infiltrate into the negative electrode plate 100, and more lithium ions in the electrolyte can deposit inside the negative electrode active material layer 30 via the through hole 31, which reduces lithium dendrites formed due to the precipitation of lithium ions on the surface of the negative electrode plate 100, improving safety of the negative electrode. In addition, the through hole 31 in the negative electrode active material layer 30 can guide lithium ions to uniformly deposit inside the negative electrode active material layer 30, thereby reducing the volume swelling of the negative electrode plate 100. In addition, under joint action of the lithiophilic plating layer 20 and the through hole 31, more lithium ions in the electrolyte can be further guided to uniformly deposit inside the negative electrode active material layer 30 along the through hole 31. If the total volume of the through hole 31 is excessively large, strength of the negative electrode plate 100 is reduced; or if the total volume of the through hole 31 is excessively small, an effect of alleviating the volume swelling of the negative electrode plate 100 is small. Therefore, the through hole 31 with the total volume in this application not only can effectively alleviate the volume swelling of the negative electrode plate 100, but also ensures excellent strength of the negative electrode plate 100. In some other embodiments, the percentage of the total volume of the through hole 31 in the total volume of the negative electrode active material layer 30 is 20% to 50%. Therefore, the volume swelling of the negative electrode plate 100 can be further alleviated and the strength of the negative electrode plate 100 can be improved.

According to some examples, "the percentage of the total volume of the through hole 31" refers to a ratio of a sum of volumes of all the through holes 31 on the negative electrode active material layer 30 on a single side surface of the current collector 10 to the negative electrode active material layer 30 on the single side surface, which can be tested via a combination of an SEM image and three-dimensional reconstruction or via BET adsorption-desorption curve.

In some embodiments, a percentage of a depth of the through hole 31 in the thickness of the negative electrode active material layer 30 is not less than 50%, and is, for example, 50% to 100%, 60% to 100%, 70% to 100%, 80% to 100%, or 90% to 100%. Therefore, more lithium ions in the electrolyte can deposit inside the negative electrode active material layer 30, which reduces lithium dendrites formed due to the precipitation of lithium ions on the surface of the negative electrode plate 100, improving safety of the negative electrode. In some other embodiments, the depth of the through hole 31 is equal to the thickness of the negative electrode active material layer 30, that is, the through hole 31 penetrates the negative electrode active material layer 30. Therefore, the lithiophilic plating layer 20 is directly exposed to the electrolyte, to guide lithium ions to uniformly deposit inside the negative electrode active material layer 30.

In some embodiments, a pore diameter of the through hole 31 is not greater than 100 µm, and is, for example, 20 µm to 100 µm, 30 µm to 90 µm, 40 µm to 80 µm, 50 µm to 70 µm, 50 µm to 60 µm, 20 µm to 50 µm, 20 µm to 40 µm, 20 µm to 30 µm, or 25 µm to 40 µm. Therefore, the obtained negative electrode plate 100 has high strength. In some other embodiments, a pore diameter of the through hole 31 is not greater than 50 µm.

In some embodiments, a distance between two adjacent through holes 31 is not greater than 100 µm, and is, for example, 20 µm to 100 µm, 30 µm to 90 µm, 40 µm to 80 µm, 50 µm to 70 µm, 50 µm to 60 µm, 20 µm to 50 µm, 20 µm to 40 µm, 20 µm to 30 µm, or 25 µm to 40 µm. Therefore, the obtained negative electrode plate 100 has high strength. In some other embodiments, the distance between the two adjacent through holes 31 is not greater than 50 µm.

In some embodiments, the negative electrode active material in the negative electrode active material layer 30 includes a graphitized carbon-like material. Specifically, the graphitized carbon-like material refers to a carbon material difficult to graphitize at high temperature, and contains a large quantity of short-range ordered and long-range disordered graphite microcrystals and micropores, defects, and oxygen-containing functional group structures, and the graphitized carbon-like material can be characterized via Raman. Compared with graphite, the graphitized carbon-like material has a lower density, while a conventional graphite-like negative electrode material has poor compatibility with the electrolyte, and co-intercalation of solvent ions in the electrolyte is likely to occur during charging and discharging, thereby causing structural damage of the negative electrode material. The graphitized carbon-like material can provide more lithium storage sites, and an interlayer spacing is large, which facilitates rapid diffusion of lithium ions, and therefore, the graphitized carbon-like material has better rate performance. In addition, a percentage of a mass of the graphitized carbon-like material in a total mass of the negative electrode active material is not less than 50%. For example, the percentage is 50% to 80%, 50% to 75%, 50% to 70%, 50% to 65%, 50% to 60%, or 50% to 55%. Therefore, the negative electrode active material can have lower volume swelling, higher theoretical specific capacity, slower capacity attenuation, and higher rate performance. In some other embodiments, a percentage of a mass of the graphitized carbon-like material in a total mass of the negative electrode active material is 50% to 70%.

A specific type of graphitized carbon-like material is not limited in this application, the graphitized carbon-like material known in the field that can be used for the negative electrode of the lithium battery can be used, and persons skilled in the art can make a selection according to actual needs. In an example, the graphitized carbon-like material may include but is not limited to at least one of hard carbon (pyrolytic carbon, carbon black, resin carbon, and biomass carbon) or soft carbon (amorphous carbon). These materials are all commercially available.

In some embodiments, to improve first-cycle coulombic efficiency of the battery, the negative electrode active material may also include a graphite material, that is, the graphitized carbon-like material is compounded with the graphite material. The graphite material may include one or more of artificial graphite, natural graphite, and composite graphite. These materials are all commercially available.

The negative electrode active material layer usually optionally further includes a binder, a conductive agent, and another optional adjuvant.

In an example, the conductive agent may be one or more of superconducting carbon, acetylene black, carbon black, Ketjen black, carbon dots, carbon nanotubes, graphene, and carbon nanofiber.

In an example, the binder is one or more of styrene-butadiene rubber (SBR), water-based acrylic resin (water-based acrylic resin), polyvinylidene fluoride (PVDF), polytetrafluoroethylene (PTFE), ethylene-vinyl acetate (EVA) copolymer, polyvinyl alcohol (PVA), and polyvinyl butyral (PVB).

In an example, another optional adjuvant may include a thickener such as carboxymethyl cellulose (CMC). However, this application is not limited thereto. Other materials that can be used as thickeners for negative electrode plates of lithium-ion batteries can also be used in this application.

A second aspect of this application discloses a method for preparing the negative electrode plate in the foregoing first aspect, including:
(1) forming a lithiophilic plating layer on at least partial surface of a current collector; and
(2) forming a negative electrode active material layer on at least partial surface on a side, farther away from the current collector, of the lithiophilic plating layer, and arranging a through hole extending along a thickness direction of the negative electrode active material layer on the negative electrode active material layer.

In some embodiments, the lithiophilic plating layer is formed on the current collector in a conventional plating method in the prior art, including but not limited to processes such as electron beam evaporation, magnetron sputtering, and foil calendering.

In some embodiments, the through hole extending along the thickness direction of the negative electrode active material layer is arranged on the negative electrode active material layer using a laser die cutting machine. Through holes with different depths, distribution densities, and pore diameters are formed on the negative electrode active material layer by controlling laser output power, laser repetition frequency, and a spot movement speed of the laser die cutting machine. In addition, because a surface of hard carbon in the negative electrode active material layer is a sparsely porous structure, hard carbon is likely to absorb moisture and oxygen in the air, to form various C-H/C-O functional groups on the surface. Lithium ions can react with these functional groups, which causes irreversible consumption of lithium ions. Heteroatoms on the surface of hard carbon can be desorbed under a thermal effect of the laser during pore forming, thereby improving the utilization rate of lithium ions.

In some embodiments, laser output power of the laser die cutting machine is not greater than 500 W, and is, for example, 10 W to 500 W, 20 W to 500 W, 30 W to 500 W, 40 W to 500 W, 50 W to 500 W, 60 W to 500 W, 70 W to 500 W, 80 W to 500 W, 90 W to 500 W, 100 W to 500 W, 150 W to 500 W, 200 W to 500 W, 250 W to 500 W, 300 W to 500 W, 350 W to 500 W, 400 W to 500 W, and 450 W to 500 W. In some other embodiments, the laser output power of the laser die cutting machine is 10 W to 100 W.

In some embodiments, laser repetition frequency of the laser die cutting machine is 50 kHZ to 2000 kHZ, for example, 50 kHZ to 1800 kHZ, 50 kHZ to 1500 kHZ, 50 kHZ to 1200 kHZ, 50 kHZ to 1000 kHZ, 50 kHZ to 800 kHZ, 50 kHZ to 600 kHZ, 50 kHZ to 500 kHZ, 50 kHZ to 480 kHZ, 50 kHZ to 450 kHZ, 50 kHZ to 420 kHZ, 50 kHZ to 400 kHZ, 50 kHZ to 380 kHZ, 50 kHZ to 350 kHZ, 50 kHZ to 320 kHZ, 50 kHZ to 300 kHZ, 50 kHZ to 280 kHZ, 50 kHZ to 250 kHZ, 50 kHZ to 220 kHZ, 50 kHZ to 200 kHZ, 50 kHZ to 180 kHZ, 50 kHZ to 150 kHZ, 50 kHZ to 120 kHZ, 50 kHZ to 100 kHZ, and 50 kHZ to 80 kHZ. In some other embodiments, the laser repetition frequency of the laser die cutting machine is 50 kHZ to 500 kHZ.

In some embodiments, the spot movement speed of the laser die cutting machine is 500 nun/s to 20000 nun/s, for example, 1000 mm/s to 18000 mm/s, 1000 mm/s to 16000 mm/s, 1000 mm/s to 14000 mm/s, 1000 mm/s to 12000 mm/s, 1000 mm/s to 10000 mm/s, 1000 mm/s to 9000 mm/s, 1000 mm/s to 8000 mm/s, 1000 mm/s to 7000 mm/s, 1000 mm/s to 6000 mm/s, 1000 mm/s to 5000 mm/s, 1000 mm/s to 4000 mm/s, 1000 mm/s to 3000 mm/s, and 1000 mm/s to 2000 mm/s. In some other embodiments, the spot movement speed of the laser die cutting machine is 1000 nun/s to 9000 nun/s.

A third aspect of this application provides a battery, including the negative electrode plate in the first aspect of this application or the negative electrode plate obtained in the method in the second aspect of this application. Therefore, the battery has excellent safety performance and cycle life.

### [Positive electrode plate]

In a battery, the positive electrode plate usually includes a positive electrode current collector and a positive electrode active substance layer provided on the positive electrode current collector, where the positive electrode active substance layer includes a positive electrode active material.

The positive electrode current collector may be a common metal foil current collector or a composite current collector (the composite current collector may be made by providing a metal material on a polymer matrix). In an example, an aluminum foil may be used as the positive electrode current collector.

A specific type of the positive electrode active material is not limited. An active material known in the art that can be used as the positive electrode of the battery may be used, and persons skilled in the art can make a selection according to an actual need.

In an example, the positive electrode active material may include but is not limited to one or more of lithium transition metal oxide, olivine-structured lithium-containing phosphate, and modified compounds thereof. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include but are not limited to one or more of lithium iron phosphate, composite materials of lithium iron phosphate and carbon, lithium manganese phosphate, composite materials of lithium manganese phosphate and carbon, lithium manganese iron phosphate, composite materials of lithium manganese iron phosphate and carbon, and modified compounds thereof. These materials are all commercially available.

The modified compounds of the foregoing materials may be obtained through doping modification and/or surface coating modification to the materials.

The positive electrode active substance layer usually optionally further includes a binder, a conductive agent, and another optional adjuvant.

In an example, the conductive agent may be one or more of superconducting carbon, acetylene black, carbon black, Ketjen black, carbon dots, carbon nanotubes, Super P (SP), graphene, and carbon nanofiber.

In an example, the binder may be one or more of styrene-butadiene rubber (SBR), water-based acrylic resin (water-based acrylic resin), polyvinylidene fluoride (PVDF), polytetrafluoroethylene (PTFE), ethylene-vinyl acetate (EVA) copolymer, polyacrylic acid (PAA), carboxymethyl cellulose (CMC), polyvinyl alcohol (PVA), and polyvinyl butyral (PVB).

### [Separator]

The foregoing separator is not specifically limited in this application, and any known porous separator with electrochemical and mechanical stability can be selected according to an actual need. For example, mono-layer or multi-layer membranes consisting of one or more of glass fiber, nonwoven fabric, polyethylene, polypropylene, and polyvinylidene fluoride may be used.

### [Electrolyte]

A battery may include an electrolyte, and the electrolyte allows ions to migrate between a positive electrode and a negative electrode. The electrolyte may include an electrolytic salt and a solvent.

In an example, the electrolytic salt may be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluoro(dioxalato)phosphate (LiDFOP), and lithium tetrafluoro oxalato phosphate (LiTFOP).

In an example, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-gamma-butyrolactone (GBL), sulfolane (SF), methyl sulfonyl methane (MSM), ethyl methanesulfonate (EMS), and diethyl sulfone (ESE).

In some embodiments, the electrolyte further includes an additive. For example, the additive may include a negative electrode film-forming additive, or may include a positive electrode film-forming additive, or may include an additive capable of improving some performance of the battery, for example, an additive for improving overcharge resistance of the battery, an additive for improving high-temperature performance of the battery, or an additive for improving low-temperature performance of the battery. In some embodiments, the battery may be a lithium-ion secondary battery.

The battery is not particularly limited in shape in the embodiments of this application, and may be cylindrical, rectangular, or in any other shapes. FIG. 2 shows a rectangular battery 1 as an example.

In some embodiments, the battery 1 may include an outer package. The outer package is used for packaging a positive electrode plate, a negative electrode plate, and an electrolyte.

In some embodiments, the outer package may include a housing and a cover plate. The housing may include a base plate and side plates connected to the base plate, and the base plate and the side plates enclose an accommodating cavity. The housing has an opening communicating with the accommodating cavity, and the cover plate can cover the opening to close the accommodating cavity.

A positive electrode plate, a negative electrode plate, and a separator may be made into an electrode assembly through winding or lamination. The electrode assembly is packaged in the accommodating cavity. The electrolyte may be an electrolyte solution, and the electrode solution infiltrates into the electrode assembly. There may be one or more electrode assemblies in the battery, and the quantity may be adjusted as required.

In some embodiments, the outer package of the battery may be a hard shell, for example, a hard plastic shell, an aluminum shell, or a steel shell.

The outer package of the battery may alternatively be a soft pack, for example, a soft pouch. A material of the soft package may be plastic, for example, may include one or more of polypropylene (PP), polybutylene terephthalate (PBT), and polybutylene succinate (PBS).

In some embodiments, batteries may be assembled into a battery module, and the battery module may include a plurality of batteries. A specific quantity may be adjusted based on application and capacity of the battery module.

FIG. 3 shows a battery module 2 as an example. Referring to FIG. 3, in the battery module 2, a plurality of batteries 1 may be sequentially arranged in a length direction of the battery module 2. Certainly, the batteries may alternatively be arranged in any other manner. Further, the plurality of batteries 1 may be fastened by using fasteners.

The battery module 2 may further include a housing with accommodating space, and the plurality of batteries 1 are accommodated in the accommodating space. In some embodiments, the battery module may be further assembled into a battery pack, and a quantity of battery modules included in the battery pack may be adjusted based on application and a capacity of the battery pack.

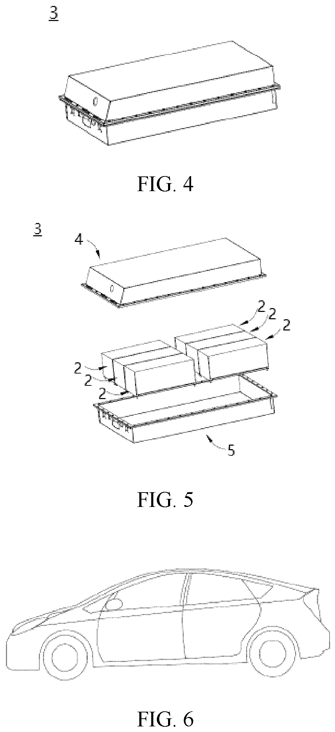

FIG. 4 and FIG. 5 show a battery pack 3 as an example. Referring to FIG. 4 and FIG. 5, the battery pack 3 may include a battery box and a plurality of battery modules 2 arranged in the battery box. The battery box includes an upper box 4 and a lower box 5. The upper box 4 can cover the lower box 5 to form an enclosed space for accommodating the battery module 2. The plurality of battery modules 2 may be arranged in the battery box in any manner.

### [Electric apparatus]

This application also provides an electric apparatus, the electric apparatus includes the battery, and the battery is configured to supply electric energy. Specifically, the battery may be used as a power supply of the electric apparatus, and may also be used as an energy storage unit of the electric apparatus. The electric apparatus may be but is not limited to a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

FIG. 6 shows an electric apparatus as an example. The electric apparatus is a battery electric vehicle, a hybrid electric vehicle, a plug-in hybrid electric vehicle, or the like.

In another example, the electric apparatus may be a mobile phone, a tablet computer, or a notebook computer. Such electric apparatus is generally required to be light and thin and may use a battery as a power supply.

To describe the technical problems solved by the embodiments of this application, technical solutions, and beneficial effects more clearly, the following further provides descriptions in detail with reference to the embodiments and accompanying drawings. Apparently, the described embodiments are only some but not all of the embodiments of this application. The following description of at least one exemplary embodiment is merely illustrative and definitely is not construed as any limitation on this application or on use of this application. All other embodiments obtained by persons of ordinary skill in the art based on the embodiments of this application without creative efforts shall fall within the protection scope of this application.

### I. Preparation method of negative electrode plate

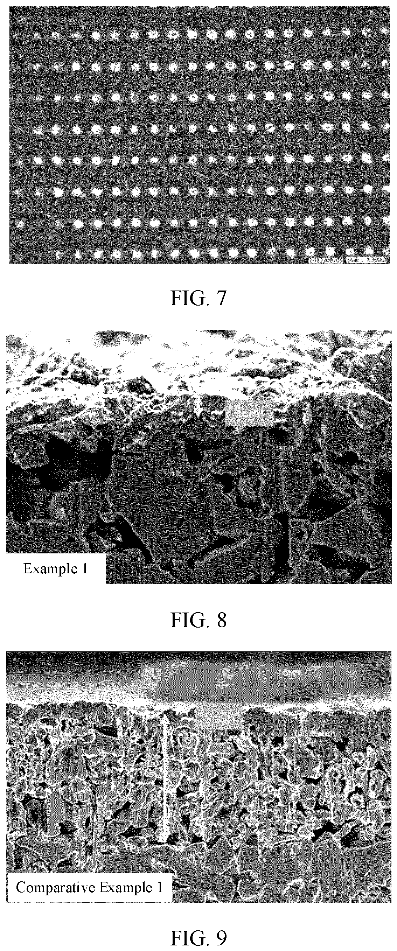

(1) A crucible containing high-purity (99.999%) Zn particles was directly heated by using electron beams released by an electron beam evaporation thin film deposition system under vacuum, and an evaporated material was transferred to copper foil, to separately form lithiophilic plating layers with thicknesses of 50 nm on two sides of the copper foil after cooling.
(2) Carbon materials (50wt% carbon black and 50wt% natural graphite), carbon black, styrene-acrylic binder SD-3, and sodium hydroxymethyl cellulose (SCMC) were dissolved in a deionized water solvent at a mass ratio of 95.5:1:3.1:0.4, a resulting mixture was mixed evenly to produce a negative electrode slurry, and then the negative electrode slurry was evenly applied onto the lithiophilic plating layer with a 50 µm spatula, to form a negative electrode active material layer with a thickness of 50 µm on the lithiophilic plating layer after drying.
(3) The composite negative electrode plate obtained in step (2) was fixed onto a continuous conveyor belt of a laser die cutting machine, part of the material on the negative electrode active material layer was removed by using a laser spot with laser output power of 500 W, laser repetition frequency of 90 kHz, and a spot displacement speed of 5000 mm/s to form through holes on the negative electrode active material layer (a total volume of the through holes accounted for 50% of a total volume of the negative electrode active material layer, an average pore diameter of the through holes was 50 µm, an average depth of the through holes was 25 µm, and an average distance between two adjacent through holes was 50 µm), to obtain a negative electrode plate 1. An image of the negative electrode plate 1 under the optical microscope is shown in FIG. 7.

Negative electrode plates 2 to 31 were prepared in the same preparation method as the negative electrode plate 1, and differences therebetween are shown in Table 1.

**Table 1**

| | Lithiophilic plating layer | | Negative electrode active material layer | | | | | |
|---|---|---|---|---|---|---|---|---|
| | Composition | Thickness (nm) | Composition of negative electrode active material | Thickness (µm) | Average pore diameter of through holes (µm) | Average depth of through holes (µm) | Percentage of total volume of through holes (%) | Average distance between two adjacent through holes (µm) |
| Negative electrode plate 1 | Zn | 50 | 50wt% carbon black and 50wt% natural graphite | 50 | 50 | 25 | 50 | 50 |
| Negative electrode plate 2 | Ag | 50 | 50wt% carbon black and 50wt% natural graphite | 50 | 50 | 25 | 50 | 50 |
| Negative electrode plate 3 | Al | 50 | 50wt% carbon black and 50wt% natural graphite | 50 | 50 | 25 | 50 | 50 |
| Negative electrode plate 4 | Au | 50 | 50wt% carbon black and 50wt% natural graphite | 50 | 50 | 25 | 50 | 50 |
| Negative electrode plate 5 | Pt | 50 | 50wt% carbon black and 50wt% natural graphite | 50 | 50 | 25 | 50 | 50 |
| Negative electrode plate 6 | Mg | 50 | 50wt% carbon black and 50wt% natural graphite | 50 | 50 | 25 | 50 | 50 |
| Negative electrode plate 7 | Zn | 20 | 50wt% carbon black and 50wt% natural graphite | 50 | 50 | 25 | 50 | 50 |
| Negative electrode plate 8 | Zn | 100 | 50wt% carbon black and 50wt% natural graphite | 50 | 50 | 25 | 50 | 50 |
| Negative electrode plate 9 | Zn | 150 | 50wt% carbon black and 50wt% natural graphite | 50 | 50 | 25 | 50 | 50 |
| Negative electrode plate 10 | Zn | 200 | 50wt% carbon black and 50wt% natural graphite | 50 | 50 | 25 | 50 | 50 |
| Negative electrode plate 11 | Zn | 400 | 50wt% carbon black and 50wt% natural graphite | 50 | 50 | 25 | 50 | 50 |
| Negative electrode plate 12 | Zn | 50 | 50wt% carbon black and 50wt% natural graphite | 50 | 50 | 25 | 10 | 50 |
| Negative electrode plate 13 | Zn | 50 | 50wt% carbon black and 50wt% natural graphite | 50 | 50 | 25 | 25 | 50 |
| Negative electrode plate 14 | Zn | 50 | 50wt% carbon black and 50wt% natural graphite | 50 | 50 | 25 | 40 | 50 |
| Negative electrode plate 15 | Zn | 50 | 50wt% carbon black and 50wt% natural graphite | 50 | 50 | 25 | 60 | 50 |
| Negative electrode plate 16 | Zn | 100 | 60wt% carbon black and 40wt% natural graphite | 50 | 50 | 25 | 50 | 50 |
| Negative electrode plate 17 | Zn | 100 | 70wt% carbon black and 30wt% natural graphite | 50 | 50 | 25 | 50 | 50 |
| Negative electrode plate 18 | Zn | 100 | 80wt% carbon black and 20wt% natural graphite | 50 | 50 | 25 | 50 | 50 |
| Negative electrode plate 19 | Zn | 100 | 90wt% carbon black and 10wt% natural graphite | 50 | 50 | 25 | 50 | 50 |
| Negative electrode plate 20 | Zn | 100 | 100wt% carbon black | 50 | 50 | 25 | 50 | 50 |
| Negative electrode plate 21 | Zn | 100 | 50wt% amorphous carbon and 50wt% natural graphite | 50 | 50 | 25 | 50 | 50 |
| Negative electrode plate 22 | Zn | 10 | 50wt% carbon black and 50wt% natural graphite | 50 | 50 | 35 | 50 | 50 |
| Negative electrode plate 23 | Zn | 500 | 50wt% carbon black and 50wt% natural graphite | 50 | 50 | 35 | 50 | 50 |
| Negative electrode plate 24 | Zn | 50 | 50wt% carbon black and 50wt% natural graphite | 30 | 50 | 21 | 50 | 50 |
| Negative electrode plate 25 | Zn | 50 | 50wt% carbon black and 50wt% natural graphite | 100 | 50 | 70 | 50 | 50 |
| Negative electrode plate 26 | / | / | 100wt% natural graphite | 50 | / | / | / | / |
| Negative electrode plate 27 | / | / | 25wt% carbon black and 75wt% natural graphite | 50 | / | / | / | / |
| Negative electrode plate 28 | / | / | 50wt% carbon black and 50wt% natural graphite | 50 | / | / | / | / |
| Negative electrode plate 29 | Si | 50 | 50wt% carbon black and 50wt% natural graphite | 50 | / | / | / | / |
| Negative electrode plate 30 | Ni | 50 | 50wt% carbon black and 50wt% natural graphite | 50 | / | / | / | / |
| Negative electrode plate 31 | Sn | 50 | 50wt% carbon black and 50wt% natural graphite | 50 | / | / | / | / |
| Negative electrode plate 32 | Sn | 50 | 50wt% carbon black and 50wt% natural graphite | 50 | 50 | 25 | 50 | 50 |
| Negative electrode plate 33 | Zn | 50 | 25wt% carbon black and 75wt% natural graphite | / | / | / | / | / |
| Negative electrode plate 34 | Zn | 50 | 25wt% carbon black and 75wt% natural graphite | 50 | 50 | 25 | 25 | 50 |
| Negative electrode plate 35 | Zn | 50 | 25wt% carbon black and 75wt% natural graphite | 50 | 50 | 25 | 10 | 50 |

### II. Preparation of battery

### 1. Preparation of positive electrode plate

A positive electrode active material lithium iron phosphate (LiFePO₄), a conductive agent carbon black, a binder polyvinylidene fluoride (PVDF), and N-methylpyrrolidone (NMP) were stirred and evenly mixed at a mass ratio of 96.9:1.7:1:0.4 to produce a positive electrode slurry; and the positive electrode slurry was evenly applied onto a positive electrode current collector aluminum foil, followed by drying, cold pressing, and cutting, to obtain the positive electrode plate, where a surface capacity of the obtained positive electrode plate was 3.5 mAh/cm².

### 2. Preparation of negative electrode plate

Negative electrode plates 1 to 35 shown in Table 1 were used.

### 3. Electrolyte

Ethylene carbonate (EC) and ethyl methyl carbonate (EMC) were mixed at a mass ratio of 30:70 to obtain an organic solvent. Fully dried electrolytic salt LiPF₆ was dissolved in the foregoing organic solvent, where a concentration of the electrolytic salt was 1.0 mol/L, and the electrolyte was obtained after even mixing.

### 4. Separator

A polypropylene film was used as a separator.

### 5. Preparation of lithium-ion battery

The positive electrode plate, the separator, and the negative electrode plate were sequentially stacked so that the separator was located between the positive electrode plate and the negative electrode plate to provide separation. Then, the resulting stack was wound to form an electrode assembly. The electrode assembly was placed in the outer package and the electrolyte was injected into the battery that was dried, followed by processes including vacuum packaging, standing, formation, and shaping, to obtain the lithium-ion battery.

Negative electrode plates of lithium-ion batteries in Examples 1 to 25 were respectively negative electrode plates 1 to 25 shown in Table 1. Lithium-ion batteries in Comparative Examples 1 to 10 respectively used negative electrode plates 26 to 35 shown in Table 1.

### III. Battery performance test

Capacity retention rate test of battery: Taking the battery in Example 1 as an example, a capacity retention rate test process of the battery was as follows: At 25°C, the battery corresponding to Example 1 was charged to 3.8 V at a constant current and a constant voltage, and then discharged to 2.0 V at a constant current, and the obtained capacity was recorded as initial capacity C₀. Then the foregoing step was repeated, discharge capacity Cₙ of the battery after the n^{th} cycle was recorded, and battery capacity retention rate Pₙ after each cycle satisfied that Pₙ = Cₙ/C₀*100% (n is the quantity of cycles). P₁, P₂, ..., Pₙ (when Pₙ was equal to or less than 60%, no more points were selected) were used as ordinates, corresponding quantities of cycles were used as abscissas, and a curve of the battery capacity retention rate and the quantities of cycles in Example 1 was obtained.

Morphology observation of lithium precipitate on surface of electrode plate: Taking Example 1 as an example, a CP-SEM test process of a lithium precipitate on the surface of the negative electrode plate was as follows: At 25°C, the battery corresponding to Example 1 was charged to 3.8 V at a constant current, a battery cell fully charged in the first cycle was disassembled in a drying room or glove box to obtain the negative electrode plate with the lithium precipitate, and residual lithium salt crystals on the surface of the electrode plate were washed with the main solvent of the electrolyte of the foregoing battery. A 1*2 cm² area in the center of the electrode plate was selected and transferred in a vacuum transfer apparatus or an inert atmosphere protection environment to an argon ion beam cross-section polisher (CP) device to make a cross section at low temperature. After cutting, the cross section was pasted on a cross-section sample table with a conductive tape and transferred to an SEM vacuum chamber for sample observation. The cross-section morphology of the obtained sample is shown in FIG. 8. Cross-section morphology of the negative electrode plate obtained for a battery in Comparative Example 1 in the same method is shown in FIG. 9. According to the cross-section morphology, a thickness of the lithium precipitate layer on the surface of the negative electrode plate was obtained.

In-situ swelling test of battery: Taking Example 1 as an example, an in-situ swelling test process of the battery was as follows: At 25°C, the battery corresponding to Example 1 was put in the middle of a swelling force sensor of an in-situ swelling tester, initial pre-tightening force was set, an initial thickness of a battery cell was recorded, the battery was charged to 3.8 V at a constant current and a constant voltage and then discharged to 2.0 V at a constant current, and a thickness change of the battery cell under constant pressure was recorded in situ during a charge/discharge cycle.

Performance test results of the lithium-ion batteries in Examples 1 to 25 and Comparative Examples 1 to 10 are shown in Table 2.

**Table 2**

| | Quantity of cycles (capacity decay to 60%) | In-situ swelling thickness of fully charged battery cell (mm) | Average thickness of lithium precipitate layer on surface of electrode plate (µm) |
|---|---|---|---|
| Example 1 | 220 | 0.01 | 1 |
| Example 2 | 215 | 0.01 | 1 |
| Example 3 | 188 | 0.01 | 2 |
| Example 4 | 209 | 0.01 | 1 |
| Example 5 | 203 | 0.01 | 2 |
| Example 6 | 212 | 0.01 | 1 |
| Example 7 | 189 | 0.02 | 2 |
| Example 8 | 211 | 0.01 | 1 |
| Example 9 | 204 | 0.01 | 1 |
| Example 10 | 197 | 0.01 | 1 |
| Example 11 | 180 | 0.01 | 1 |
| Example 12 | 169 | 0.04 | 4 |
| Example 13 | 187 | 0.03 | 4 |
| Example 14 | 206 | 0.02 | 3 |
| Example 15 | 192 | 0.02 | 3 |
| Example 16 | 214 | 0.01 | 1 |
| Example 17 | 208 | 0.01 | 1 |
| Example 18 | 186 | 0.01 | 1 |
| Example 19 | 172 | 0.01 | 1 |
| Example 20 | 163 | 0.01 | 1 |
| Example 21 | 187 | 0.02 | 3 |
| Example 22 | 175 | 0.01 | 1 |
| Example 23 | 169 | 0.01 | 1 |
| Example 24 | 167 | 0.04 | 4 |
| Example 25 | 259 | 0.01 | 1 |
| Comparative Example 1 | 69 | 0.07 | 9 |
| Comparative Example 2 | 98 | 0.07 | 8 |
| Comparative Example 3 | 132 | 0.07 | 7 |
| Comparative Example 4 | 150 | 0.06 | 6 |
| Comparative Example 5 | 158 | 0.05 | 6 |
| Comparative Example 6 | 146 | 0.06 | 6 |
| Comparative Example 7 | 159 | 0.04 | 5 |
| Comparative Example 8 | 143 | 0.04 | 7 |
| Comparative Example 9 | 160 | 0.02 | 5 |
| Comparative Example 10 | 155 | 0.03 | 6 |

In conclusion, it can be seen from Table 1 that battery capacity retention rates of lithium-ion batteries corresponding to Examples 1 to 25 are obviously higher than those in Comparative Examples 1 to 10, and in-situ swelling thicknesses of fully charged battery cells and average thicknesses of lithium precipitate layers on surfaces of electrode plates in the lithium-ion batteries corresponding to Examples 1 to 25 are obviously lower than those in Comparative Examples 1 to 10, indicating that the battery with the negative electrode plate in this application has excellent safety performance and cycle life.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A negative electrode plate, comprising:
a current collector;
a lithiophilic plating layer, wherein the lithiophilic plating layer is formed on a surface on at least one side of the current collector; and
a negative electrode active material layer, wherein the negative electrode active material layer is formed on at least partial surface on a side, farther away from the current collector, of the lithiophilic plating layer, and a through hole extending along a thickness direction of the negative electrode active material layer is arranged on the negative electrode active material layer.

2. The negative electrode plate according to claim 1, wherein the lithiophilic plating layer comprises at least one of a group IB element, a group IIA element, a group IIB element, a group IIIA element, or a group VIII element.

3. The negative electrode plate according to claim 1 or 2, wherein the lithiophilic plating layer comprises at least one of Ag, Au, Pt, In, Zn, Mg, or Al.

4. The negative electrode plate according to any one of claims 1 to 3, wherein a thickness of the lithiophilic plating layer is 10 nm to 500 nm, and optionally 20 nm to 200 nm.

5. The negative electrode plate according to any one of claims 1 to 4, wherein a thickness of the negative electrode active material layer is 30 µm to 100 µm.

6. The negative electrode plate according to any one of claims 1 to 5, wherein a percentage of a total volume of the through hole in a total volume of the negative electrode active material layer is not greater than 60%, and preferably 20% to 50%.

7. The negative electrode plate according to any one of claims 1 to 6, wherein a depth of the through hole is not less than 50% of a thickness of the negative electrode active material layer.

8. The negative electrode plate according to any one of claims 1 to 7, wherein a pore diameter of the through hole is not greater than 100 µm, and preferably not greater than 50 µm.

9. The negative electrode plate according to any one of claims 1 to 8, wherein a distance between two adjacent through holes is not greater than 100 µm.

10. The negative electrode plate according to any one of claims 1 to 9, wherein the negative electrode active material layer comprises a negative electrode active material, the negative electrode active material comprises a graphitized carbon-like material, and a percentage of a mass of the graphitized carbon-like material in a total mass of the negative electrode active material is not less than 50%, and preferably 50% to 70%.

11. The negative electrode plate according to any one of claims 1 to 10, wherein the graphitized carbon-like material comprises at least one of pyrolytic carbon, carbon black, resin carbon, biomass carbon, or amorphous carbon.

12. The negative electrode plate according to any one of claims 1 to 11, wherein the negative electrode active material further comprises a graphite material.

13. A method for preparing the negative electrode plate according to any one of claims 1 to 12, comprising:
forming a lithiophilic plating layer on at least partial surface of a current collector; and
forming a negative electrode active material layer on at least partial surface on a side, farther away from the current collector, of the lithiophilic plating layer, and arranging a through hole extending along a thickness direction of the negative electrode active material layer on the negative electrode active material layer.

14. The method according to claim 13, wherein the through hole extending along the thickness direction of the negative electrode active material layer is arranged on the negative electrode active material layer using a laser die cutting machine.

15. The method according to claim 13 or 14, wherein the laser die cutting machine satisfies at least one of the following conditions:
laser output power is not greater than 500 W, and optionally 10 W to 100 W;
laser repetition frequency is 50 kHZ to 2000 kHZ, and optionally 50 kHZ to 500 kHZ; or
a spot movement speed is 500 mm/s to 20000 mm/s, and optionally 1000 mm/s to 9000 mm/s.

16. A battery, **characterized by** comprising the negative electrode plate according to any one of claims 1 to 12 or a negative electrode plate obtained in the method according to any one of claims 13 to 15.

17. An electric device, **characterized by** comprising the battery according to claim 16, wherein the battery is configured to supply electric energy.
